# EUROPEAN PATENT SPECIFICATION

(11) **EP 3 320 628 B1**
(45) Date of publication and mention of the grant of the patent: **15.03.2023**
(21) Application number: 16822008.5
(22) Date of filing: 07.07.2016
(51) Int. Cl.: H04B 7/06, H04B 17/345, H04B 17/318

(54) **SYSTEMS AND METHODS OF INTERFERENCE MITIGATION FOR CONCURRENT LINKS IN BEAMFORMED COMMUNICATION**
SYSTEME UND VERFAHREN ZUR INTERFERENZABSCHWÄCHUNG FÜR GLEICHZEITIGE VERBINDUNGEN IN STRAHLGEFORMTER KOMMUNIKATION
SYSTÈMES ET PROCÉDÉS D'ATTÉNUATION DE BROUILLAGE POUR LES LIAISONS SIMULTANÉES DANS DES COMMUNICATIONS À FORMATION DE FAISCEAU

(30) Priority: 08.07.2015 US 201562189929 P
(43) Date of publication of application: 16.05.2018
(73) Proprietor: QUALCOMM Incorporated, San Diego, CA 92121-1714 (US)
(72) Inventor: HO, Keangpo Ricky, Hillsboro, Oregon 97124-6421 (US); YANG, Ou, Hillsboro, Oregon 97124-6421 (US); CHENG, Shi, Hillsboro, Oregon 97124-6421 (US); CHERNIAVSKY, Dmitry, Hillsboro, Oregon 97124-6421 (US)
(74) Representative: Bardehle Pagenberg Partnerschaft mbB Patentanwälte Rechtsanwälte
(86) International application number: PCT/US2016/041405
(87) International publication number: WO 2017/007973

(56) References cited:
- WO-A1-2013/085468
- WO-A1-2014/074894
- WO-A2-2010/148371
- US-A1- 2007 298 742
- US-A1- 2011 235 533
- US-A1- 2014 226 520
- US-A1- 2015 030 094
- US-A1- 2015 030 094

## Description

### CROSS-REFERENCE TO RELATED APPLICATIONS

This application claims the benefit of and priority to U.S. Provisional Patent Application No.: 62/189,929 filed on July 08, 2015 and entitled "SYSTEMS AND METHODS OF INTERFERENCE MITIGATION FOR CONCURRENT LINKS IN BEAMFORMED COMMUNICATION".

### TECHNICAL FIELD

The present disclosure relates generally to wireless communication, and in particular, to systems and methods for mitigating interference with wireless communications.

### BACKGROUND

A transmitter device and a receiver device, each having multiple antennas, may exchange channel information to enable beamformed wireless communications to transmit data between each other. This process allows the transmitter device and the receiver device to use the channel information to adjust characteristics of the beamforming to enhance the performance of their communication link, as is for example described in US 2014/226520 A1 and US 2015/030094 A1. However, this conventional process fails to take into account the interfering effects the beamformed wireless communications between the transmitter device and the receiver device may have on non-participating devices (e.g., devices other than the transmitter device and the receiver device that are communicating over different communication links). Thus, there is a need in the art for methodologies to reduce interfering effects to devices that are not intended participants of a wireless communication link.

### BRIEF DESCRIPTION OF THE FIGURES

Fig. 1 is a schematic view illustrating an embodiment of a wireless communication system with the presence of one or more interferee devices.
Fig. 2 is another schematic view illustrating an embodiment of a wireless communication system with the presence of one or more interferee devices.
Fig. 3 is a schematic view illustrating an embodiment of a wireless communication system performing beamforming interaction.
Fig. 4 is second schematic view illustrating an embodiment of a wireless communication system performing beamforming training.
Fig. 5 is third schematic view illustrating an embodiment of a wireless communication system performing beamforming training.
Fig. 6 is a schematic view illustrating an embodiment of a wireless communication system.
Fig. 7 is a schematic view illustrating an embodiment of a wireless communication system with an interference mitigation feature.
Fig. 8 is a second schematic view illustrating an embodiment of a wireless communication system with an interference mitigation feature.
Fig. 9 is a third schematic view illustrating an embodiment of a wireless communication system with an interference mitigation feature.
Fig. 10 is a fourth schematic view illustrating an embodiment of a wireless communication system with an interference mitigation feature.
Fig. 11 is a fifth schematic view illustrating an embodiment of a wireless communication system with an interference mitigation feature.
Fig. 12 is a sixth schematic view illustrating an embodiment of a wireless communication system with an interference mitigation feature.
Fig. 13 is a flow chart illustrating an embodiment of a method for mitigating interference in a beamformed wireless communication.
Fig. 14 is a flow chart illustrating an embodiment of an example wireless network device with an interference mitigation feature.
Fig. 15 is a second flow chart illustrating an embodiment of an example wireless network device with an interference mitigation feature.

Embodiments of the present disclosure and their advantages are best understood by referring to the detailed description that follows. It should be appreciated that like reference numerals are used to identify like elements illustrated in one or more of the Figures, wherein showings therein are for purposes of illustrating embodiments of the present disclosure and not for purposes of limiting the same.

### DETAILED DESCRIPTION

The present disclosure provides systems for mitigating interference between concurrent but device-segregated communication links in beamformed communications. In some implementations, when communicating with a responder device, a transmitter device may take into account channel measurement information provided by one or more other non-participating devices, for example, a third device that is not participating in the communication link formed between the responder device and the transmitter device. Because a transmitter device initiates the wireless communication with a responder device, the transmitter device may be also referred to as an initiator device (or an initiator) in the present disclosure.

The transmitter device may use the channel measurement information provided by a non-participating device to modify its communication link (e.g., how to form a beam for communicating) with the responder device. Embodiments of the present disclosure can provide a variety of technical advantages. First, interference (caused by the communication between the transmitter device and the responder device) to non-participating devices can be reduced. The non-participating devices may also referred to as interferee devices in the present disclosure, as the communication between the transmitter device and the responder device may reduce the quality of communication links among non-participating devices. Second, non-participating devices may detect a beamforming process between an initiator and a responder and participate (or not) in the process; neither the initiator nor the responder need to detect the presence of the non-participating devices beforehand. Additional details and implementations are now described in relation to the Figs.

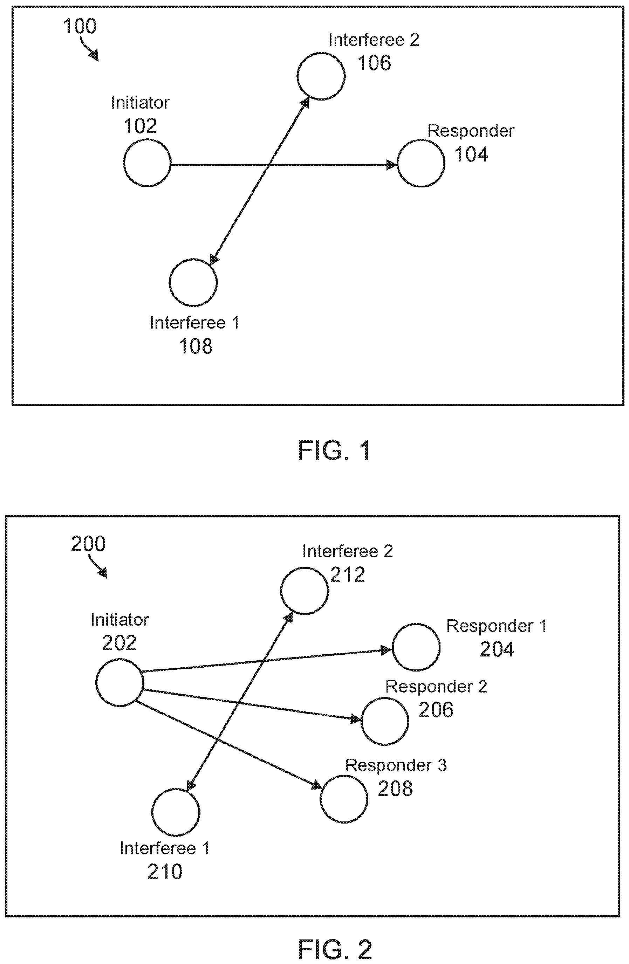

Fig. 1 is a schematic view illustrating an embodiment of a wireless communication system 100 with the presence of one or more interferees. Fig. 1 shows a communication link between a transmitter device 102 and a responder device 104. In one embodiment, the communication link may include multiple spatial streams in a single-user (SU) multi-input-multi-output (MIMO) implementation. Here, the communication link between initiator 102 and responder 104 may degrade or otherwise interfere with the communication link between interferee 106 and interferee 108. For example, transmissions of electromagnetic waves between transmitter device 102 and responder device 104 may interfere with the transmissions between interferee 106 and interferee 108.

In some embodiments, the beamforming is conducted in the beam refinement phase (BRP) of a beamforming process. A single-user BRP process may be used to reduce interference to interferees 106 and 108. For example, initiator 102 may ask for, and interferees 106 and 108 may provide, BRP feedback to the initiator 102. The BRP feedback may include channel measurement information (e.g., spatial channel information based on the current direction of an antenna array, frequency response, impulse response, energy direction, communication link vector, and/or other channel measurement information) descriptive of interference/communication links between initiator 102 and interferees (e.g., interferees 106 and/or 108), based on which the initiator 102 may modify its beamformed communication link with the responder 104. These technologies may reduce interference from the initiator 102 to the communication link between interferees 106 and 108.

Fig. 2 is another schematic view illustrating an embodiment of a wireless communication system 200 with the presence of one or more interferees. Fig. 2 shows a multi-user (MU) MIMO link, in which communication links between the initiator 202 and several responders (e.g., 204, 206, and 208) may cause interference to a concurrent communication link between the interferees 210 and 212. In some implementations, a BRP feedback process similar to the one explained with reference to Fig. 1 may be used to reduce the interference.

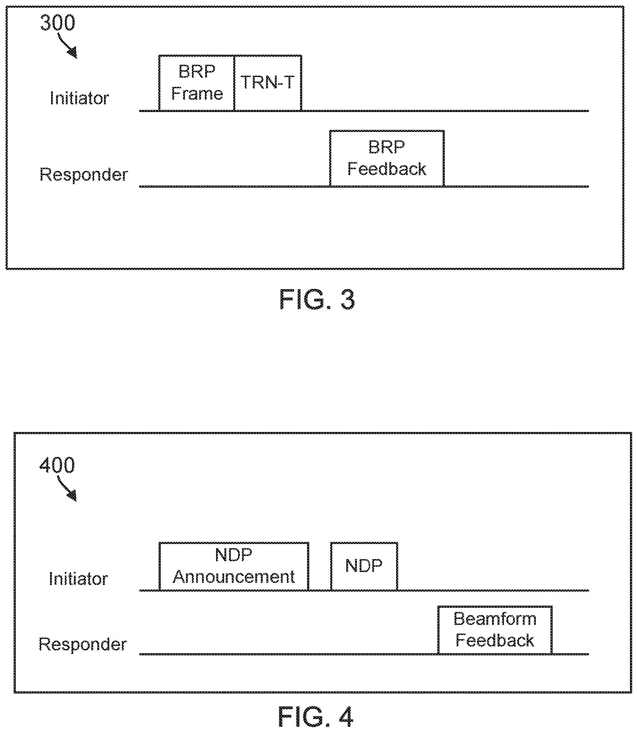

Figs. 3-5 illustrate various processes which a transmitter device (or an initiator) may use to form beams to communication with a responder device (or a responder) in accordance with different wireless communication standards (e.g., 802.11ad, 802.11n, 802.11ac, the emerging 802.11ax and 802.11ay, and/or other wireless communication standards that employ beamforming techniques). As shown in Fig. 3, in one implementation 300, where an antenna array including a large number of antennas/antenna elements (e.g., more generally, 8, 9, 16, 24, 48, 64, 128, and/or other numbers of antennas typically greater than 4, 5, or 8 antennas) is used, an initiator may use the post-amble of a packet (e.g., a training post-amble "TRN-T", which may be appended to a data packet or other type of transmitted packet) for beam forming purposes. The initiator may send a beamforming pattern in the post-amble of the packet; in response, the responder may provide BRP feedback back to the initiator. The BRP feedback may include channel measurement information concerning the communication link between the initiator and the responder.

In some implementations (e.g., where the WirelessHD protocol and/or other relatively high bandwidth wireless protocols are used), the responder may provide an antenna weight vector for various antennas if the transmitted beamforming pattern is predefined and known to the responder. In some other implementations, the raw channel measurement information may be sent back to the initiator. The initiator may then use the channel measurement information when forming a beam to communicate wirelessly with the responder. These features may be implemented in wireless communications using any of a variety of wireless communication standards, including 802.11ad. Note that in some embodiments, BRP information is exchanged between an initiator and a responder; in other embodiments, an interferee device may also provide BRP feedback of its own to the initiator, so that the communication link between the initiator and the responder may be formed to interfere less with an interferee device (e.g., a device that is not an intended recipient of data communications transmitted by the initiator).

In other implementations, (e.g., such as those utilizing 802.11ac and/or 802.11n ), beamforming may be provided by null-data-packet (NDP) transmission techniques. As shown in Fig. 4, in an implementation 400, an antenna array may include a relatively small number of antennas (e.g., a plurality of antennas fewer than four or fewer than none antennas, for example), an initiator can make an announcement (e.g., an NDP announcement) to a responder, asking the responder to provide beamforming feedback. In some implementations, after making an NDP announcement, the initiator sends a NDP to the responder; the responder, in turn, provides an antenna array factor or a beamforming matrix (e.g., types of channel measurement information) to the initiator. The initiator may then consider the antenna array factor or the beamforming matrix when forming a beam to communicate wirelessly with the responder. These features may be implemented under various wireless communications standards, such as the existing 802.11ac and 802.11n standards or the coming 802.11ax standards, for example. In other implementations, the process 400 may be implemented in a system where there are a larger number of antennas (e.g., five or more antennas).

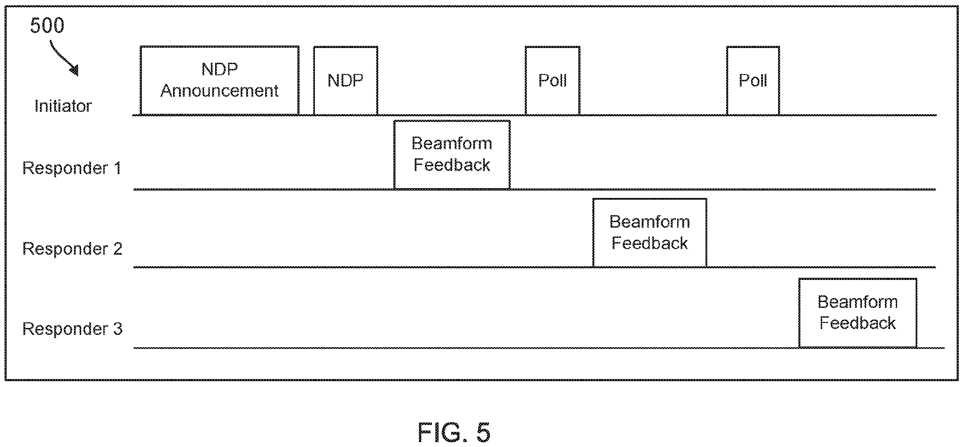

As shown in Fig. 5, in an implementation 500, an initiator may communicate with two or more responders in a MU MIMO link. The initiator may consider channel measurement information (e.g., an antenna array factor or a beamforming matrix) when forming a beam to communicate wirelessly with the two or more responders.

Note that in the example implementations shown in Figs. 3-5, beamforming (or BRP) feedback may be exchanged between an initiator and one or more responders without regard to either the presence non-participating devices or the existence of the communication links among these non-participating devices. As a result, the quality of communication links among the non-participating devices may be negatively affected by the communication link between an initiator and one or more responders. To address this technical problem, in some implementations, an interferee device may also provide beamforming feedback of its own to the initiator, so that the communication between the initiator and the responder interferes less with one or more interferee devices.

In some implementations, the beamforming feedback an interferee device provides to an initiator may include not only a channel quality report (which may identify an amount of interference an initiator has on an interferee device), but also channel measurement information for beamforming purpose. In some implementations, the channel measurement information is frequency response of the channel, including the response of the radio frequency circuitry and antennas. In some implementations, the channel measurement information is impulse response of the channel. Further, the technologies described in the present disclosure provide a different technical solution from that provided by considering channel quality report; the technical solutions provided herein enable communication links with the presence of multiple wireless communication links (e.g., LANs), while the latter sets out to avoid the existence of multiple wireless communication links.

In accordance with embodiments of the present disclosure, to enable concurrent links with minimum interference to other wireless LANs, the beamforming initiator may attempt to maximize beamforming gain to the beamforming responder and to minimize the interference to the interferee devices. In these implementations, interferee devices are enabled or requested to participate in the transmitter beamforming process.

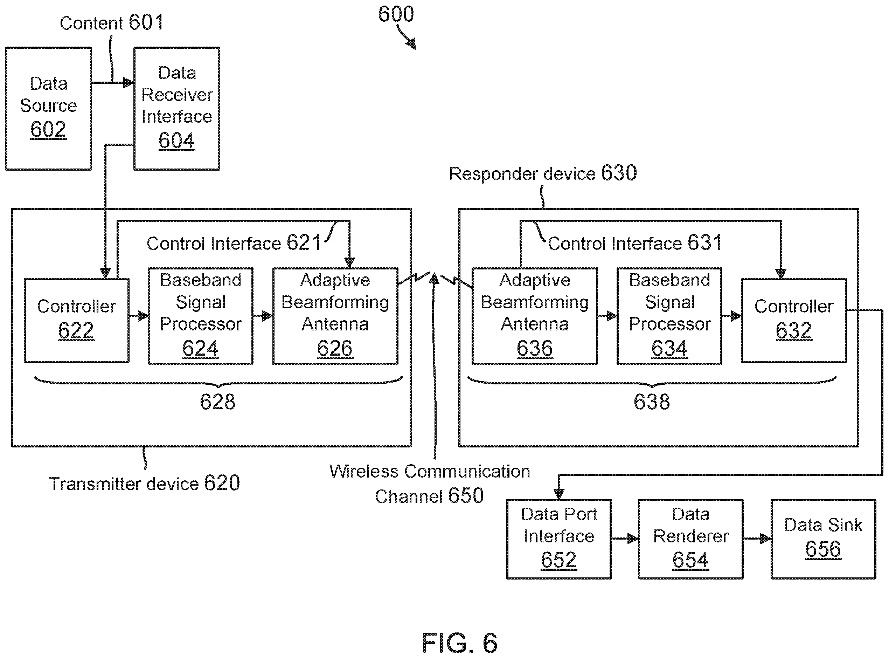

Fig. 6 is a schematic view illustrating an embodiment of a wireless communication system 600 on an interference mitigation feature can be implemented. The wireless communication system 600 may include a data source 602, a data receiver interface 604, a transmitter device 620, a responder device 630, a data port interface 652, a data renderer 654, and a data sink 656. The data source 602 may store data and provide data to the transmitter device 620 for transmission to the responder device 630. The data source 602 may be a computing device providing data for transmission to another computing device. In some implementations, the data source 602 may be a routing device to connect to a wide area network. In various embodiments, the data source may be a laptop, a smartphone, a tablet computer, a desktop computer, a notebook computer, and/or other user device. The data receiver interface 604 may obtain data from the data source 602 and provide them to the transmitter device 620.

The transmitter device 620 and the responder device 630 may have similar hardware components and may wirelessly communicate with each other and with other non-participating devices. Transmitter and responder devices may be either half-duplex or full duplex. The transmitter device 620 may include a controller 622, a baseband signal processor 624, an adaptive beamforming antenna 626, and a wireless communication channel interface 628 (e.g., an antenna sub-system), which may include all or portions of controller 622, baseband signal processor 624, and/or650 adaptive beamforming antenna 626, as shown. The transmitter device 630 may include a controller 632, a baseband signal processor 634, an adaptive beamforming antenna 636, and a wireless communication channel interface 638 (e.g., an antenna sub-system), which may include all or portions of controller 632, baseband signal processor 634, and/or adaptive beamforming antenna 636, as shown. The controller (622 or 632) may be configured to perform beamforming operations with one or more interference mitigation features described in the present disclosure. The baseband signal processor (624 or 634) may be configured to manage radio functions (e.g., Wi-Fi and Bluetooth radio functions, as well other functions that require an antenna or antenna array). In various embodiments, an antenna subsystem of transmitter device 620 or responder device 630 (e.g., analogous to interferee devices) typically includes at least an adaptive beamforming antenna ( e.g., adaptive beamforming antenna 626 or 636).

Controllers 622/632, baseband signal processors 624/634, and adaptive beamforming antennas 626/636 may each be implemented as or with any appropriate logic device (e.g., processing device, microcontroller, processor, application specific integrated circuit (ASIC), field programmable gate array (FPGA), memory storage device, memory reader, or other device or combinations of devices) that may be adapted to execute, store, and/or receive appropriate instructions, such as software instructions implementing a control loop for controlling various operations of co-controller 120, transmitter 122, receiver 126, and/or other modules of system 110, for example. Such software instructions may also implement methods for transmitting and receiving packets, beamforming communication links, determining channel measurement information, querying devices for operational parameters, selecting operational parameters for devices, and/or performing any of the various methods described herein.

The adaptive beamforming antenna (626 or 636) may be configured to perform adaptive spatial signal processing with an array of transmitters or receivers and corresponding antennas/antenna elements. The signals are combined in a manner to increases signal strength to/from a chosen direction and/or to form wireless communication channel/communication link 650. Signals to/from other directions are combined in a benign or destructive manner, resulting in strengthening or degradation of the signal to/from the undesired direction. The control interface (621 or 631) enables a controller to manage an adaptive beamforming antenna, e.g., including changing antenna direction or adjusting signal strength towards particular direction. The controller of a responder device may be communicatively connected with a data port interface 652, which enables the responder device to interact with (e.g., storing, modifying, and/or communicating data) the data sink 656 through the data renderer 654. In some implementations, the components 622, 624, and 626 (or 632, 634, and 636) are collectively referred to as a wireless communication channel interface, as shown.

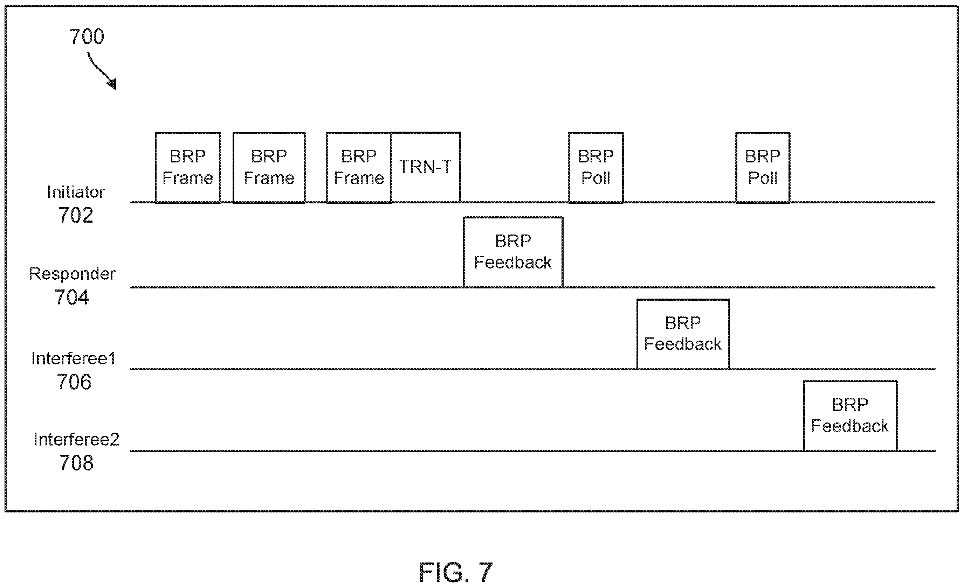

Figs. 7-12 illustrate several example implementations of an interference mitigation process. In some implementations, an interferee may participate in either a single user (SU) beamforming or a multi-user (MU) beamforming, with one or more spatial streams per user. In some implementations, an initiator can poll one or more potential interferees and obtain channel measurement information from these interferees. In accordance with the channel measurement information obtained from the responder-and channel measurement information obtained from at least one interferee-the transmitter may form a beam to communicate with the responder. These technologies can reduce interference to one or more interferees (e.g., the interferee devices 106 and 108) and improve the quality of the communication link between an initiator and one or more responders.

Fig. 7 is a schematic view illustrating an embodiment of a wireless communication system 700 with an interference mitigation feature. As shown in Fig. 7, an initiator 702 may send BRP polls to one or more potential interferees 706 and 708, requesting channel measurement information as part of the BRP feedback from the potential interferees. The initiator 702 may then take into account the channel measurement information obtained from responder 704, as well as that obtained from the interferee 706, from the interferee 708, or from both, when forming a beam to communicate wirelessly with the responder 704.

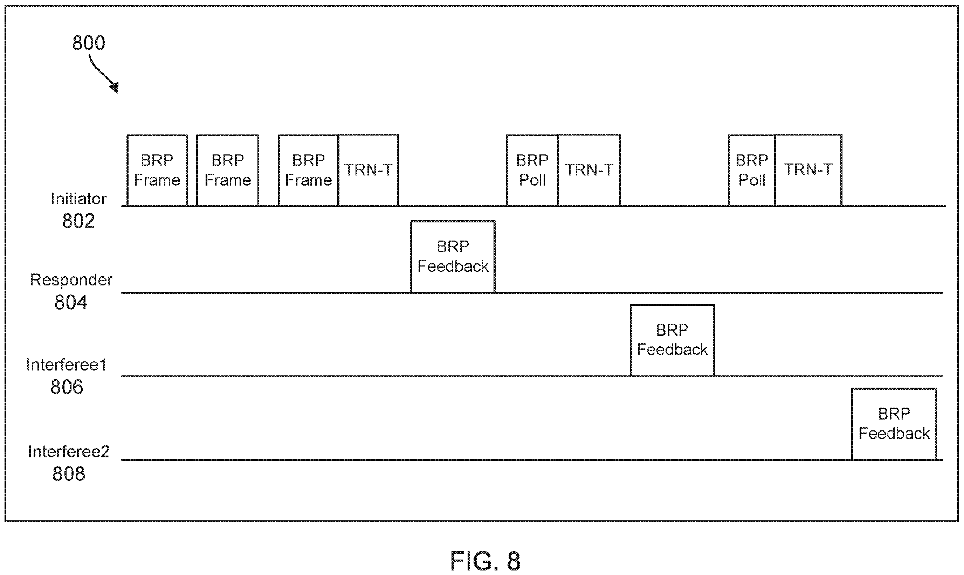

Fig. 8 is a second schematic view illustrating an embodiment of a wireless communication system with an interference mitigation feature. An initiator may use another method to request BRP feedback from potential interferees. For example, as shown in Fig. 8, an initiator may send each BRP poll with a training data packet (TRN-T), which may be the post-amble of a packet. Whether a BRP poll is accompanied by a post-amble may be determined by the initiator and made known to other devices (e.g., a responder device or an inteferee device). In other implementations, an interferee device may request that the initiator include the post-amble in a BRP poll, when sending a request for the initiator to join the beamforming process. Similar to those discussed with reference to Fig. 7, the initiator 802 may take into account the channel measurement information obtained from responder 804, as well as that obtained from the interferee 806, from the interferee 808, or from both, when forming a beam to communicate wirelessly with the responder 804.

In the example shown in Fig. 1, the channel measurement information provided by the inteferee 106 may identify that an antenna of the inteferee 106 points directly towards an antenna of the interferee 108. In the examples shown in Figs. 6-7, an initiator may, based on channel measurement information provided by an interferee, determine an antenna weight vector (e.g., an optimal vector) to reduce interference to the interferees. Alternatively, the channel measurement information may be provided to a responder; the responder may calculate the optimal antenna weight vector for the initiator. In these implementations, a BRP poll may be sent by the initiator to potential interferees. The BRP feedback may be the last packet in the transmitter training with the antenna weight vector.

In the implementations shown in Figs. 7-8 and 11-12 (which will be explained in greater detail below), an initiator begins a BRP process with a responder by sending a BRP transmitter training request (BRP-T-REQ) frame to one or more interferees without appending TRN-T training sequences in order to announce a coming beamforming process. In some implementations, the initiator sends a separate BRP-T-REQ frame to each interferee. The BRP-T-REQ frames serve the purpose of synchronizing phases between an initiator and an interferee. After sending out a BRP-T-REQ frame, the initiator starts a BRP training process with a responder by sending the responder a BRP-T-REQ frame with post-amble training sequences (e.g., a TRN-T packet). The responder receives the BRP-T-REQ frame with the TRN-T packet and responds to the initiator with a BRP transmitter training feedback (BRP-TFDB) frame. While the initiator and the responder are going through the BRP training process, interferee devices may be communicating with each other using a separate but concurrent communication link.

After receiving the BRP-T-FDB frame from the responder, the initiator may send a BRP Poll frame to one or more interferees, to collect feedback (e.g., a BRP-T-FDB frame) from them. If an interferee misses the BRP training between the initiator and the responder or the BRP Poll frames, the initiator may not receive feedback from the interferee. In some implementations, if an initiator does not receive any feedback from an inteferee, after a predetermined amount of time has passed after sending out a BRP-Poll, the initiator assumes the interference is no longer active and thus does not consider channel measurement information concerning the interferee when communicating with the responder. In other implementations, the initiator may consider that the interferee does not have interference from the initiator.

After gathering feedback from a predefined number of interferees (e.g., all or a subset of interferees), the initiator may compute a composite channel response for each responder or each interferee. A composite channel response may include the MIMO channel and the antenna weight applied on the receiver. The initiator then may compute a transmit beamforming vector and generate a transmission pattern that has a notch to the composite channel responses of the interferees, thereby providing reasonable beamforming gains to the responders with a reduced amount of interference to the interferees. A beamforming vector may be calculated using either zero-forcing or its regularized version. Zero-forcing beamforming projects the beam from initiator to the responders onto the nullspace formed by the composite channel responses of the interferees. Regularized zero-forcing beamforming is a modified version of the zero-forcing beamforming, which allows less than a threshold amount of interference to an interfere. One version of regularized zero-forcing beamforming balances the amount of noise and interference, to minimize the combined of noise and interference.

In some implementations, an intiator considers all non-participating devices interferees. For example, as shown in Fig. 1, the initiator 102 may consider both the device 106 and the device 108 interferees. In some other implementations, an initiator considers only a subset of non-participating devices interferees. For example, the initiator 102 may consider the device 106 an inteferee, both not the device 108. In this case, therefore, the initiator 102 might not request beamforming feedback from the device 108.

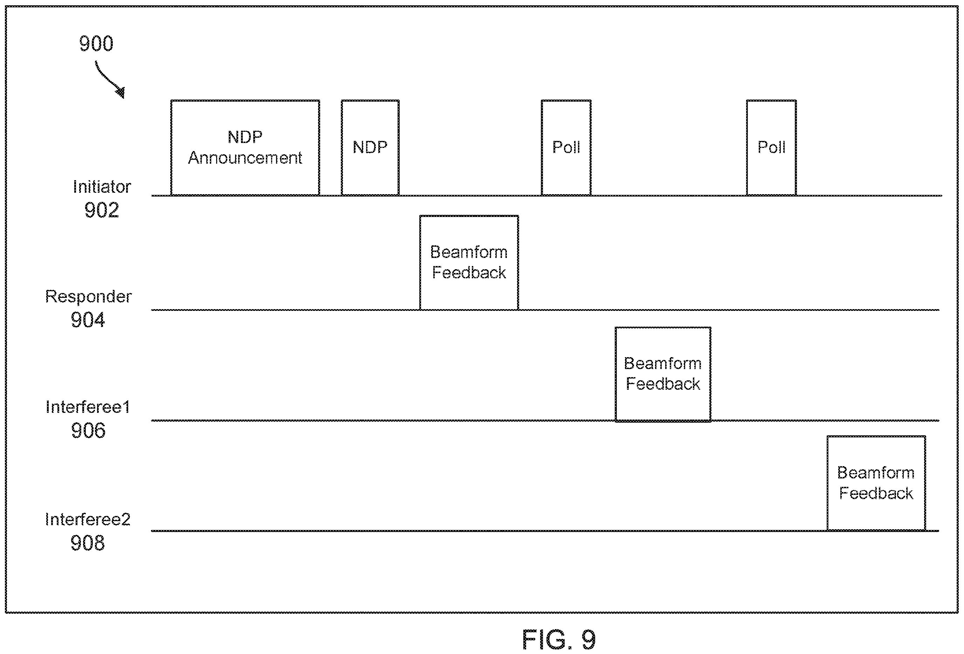

Fig. 9 is a third schematic view illustrating an embodiment of a wireless communication system with an interference mitigation feature. As shown in Fig. 9, in some implementations, an initiator 902 may make an NDP announcement to potential interferee devices 906 and 908, followed by an NDP. The initiator 902 may transmit the NDP announcement using an omni-directional antenna, so that the NDP announcement may be broadcasted to interferee devices located in as many directions as possible, thereby reaching as many potential interferee devices as possible. Similar to those discussed with reference to Fig. 7, the initiator 902 may take into account the channel measurement information obtained from responder 904, as well as that obtained from the interferee 906, from the interferee 908, or from both, when forming a beam to communicate wirelessly with the responder 904.

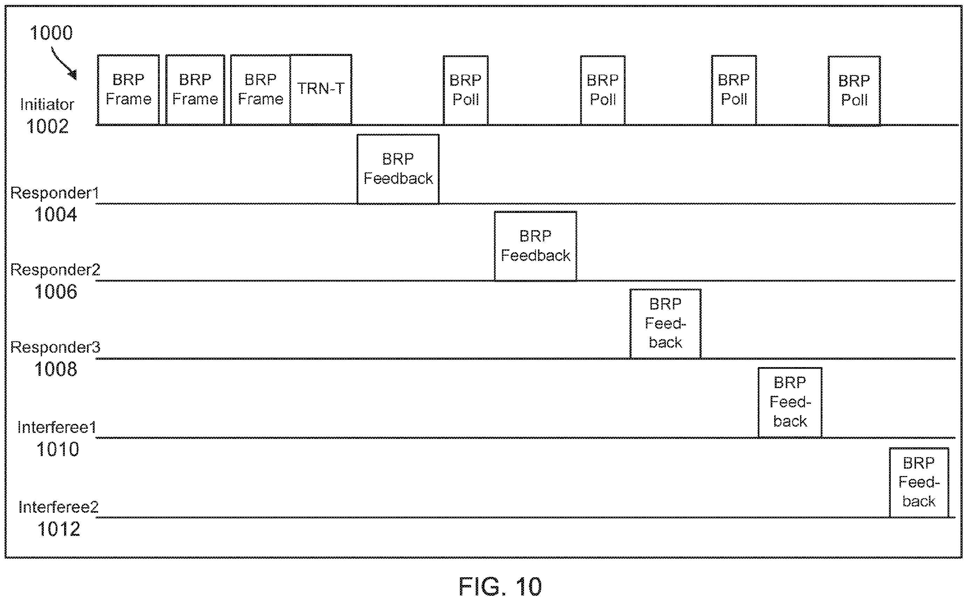

Figs. 10-12 illustrate example implementations in which interferee devices participate in an MU-MIMO beamforming process. As shown in Fig. 10, in some implementations, an initiator 1002 may send BRP polls to three responders 1004, 1006, and 1008, as well as one or more potential interferees 1006 and 1008, requesting channel measurement information as part of the BRP feedback from the responders and from the potential interferees. The initiator 1002 may then take into account the channel measurement information obtained from the responders 1004, 1006, and 1008, as well as that obtained from the interferee 1010, from the interferee 1012, or from both, when forming a beam to communicate wirelessly with the responders. In some implementations, an initiator may need to make an announcement to one or more responders that do not have strong MU-MIMO communication links with an initiator.

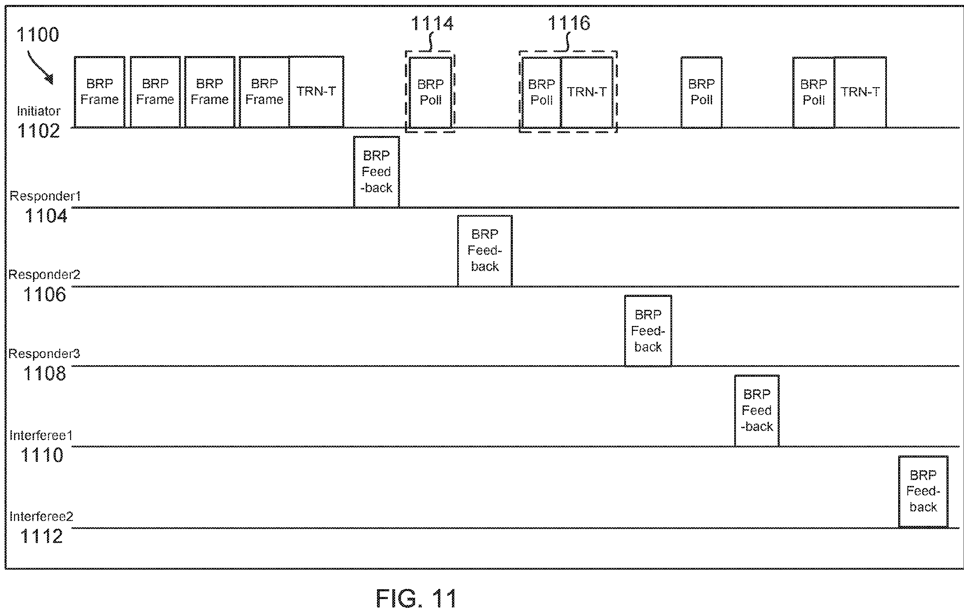

As shown in Fig. 11, in some implementations, an initiator 1102 may send BRP polls to two or more responders 1104, 1106, and 1108, as well as one or more potential interferees 1110 and 1112. The BRP poll 1114 is not accompanied by a post-amble; while the BRP poll 1116 is accompanied by a post-amble. In some implementations, a BRP poll is accompanied by a post-amble, because the responder being polled (e.g., the responder 1108) does not have a strong communication link with the initiator 1102. In these situations, the initiator may transmit a post-amble to a responder device (or an interferee device). After collecting all the channel measurements from one or more responders and one or more interferees, the initiator can provide a beamforming matrix to optimize the system performance. In some implementations, the initiator may maximize the overall throughput to one or more responders, subject to certain criteria of the interference to one or more interferees.

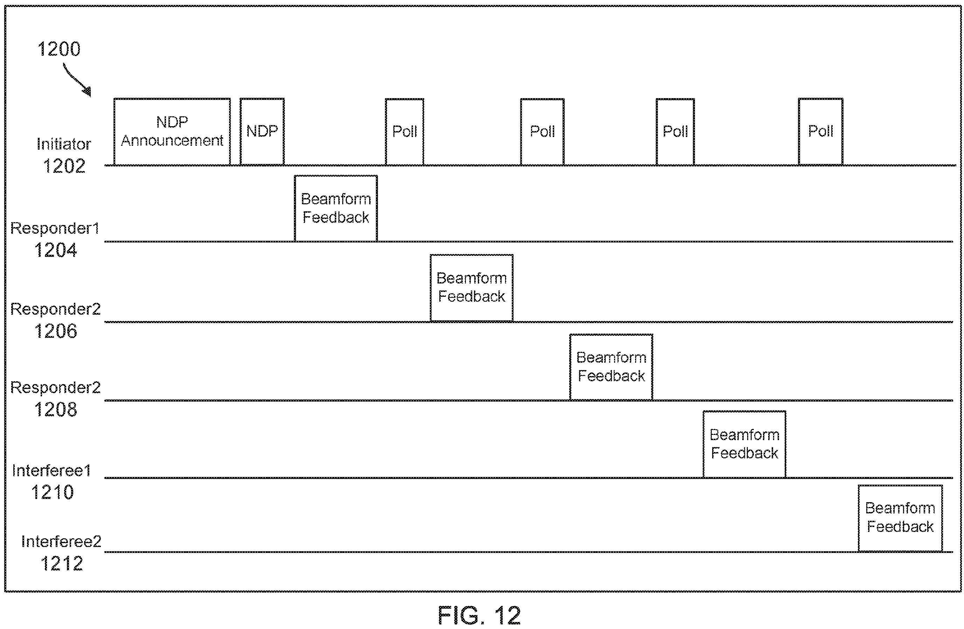

As shown in Fig. 12, in some implementations, an initiator 1202 may broadcast an NDP announcement followed by an NDP to two or more responders 1204, 1206, and 1208, as well as one or more potential interferees 1210 and 1212. In some implementations, an announcement broadcast is used when an initiator is uncertain about the number of interferees present or their respective locations; responsive to receiving the announcement, an interferee can make itself known to the initiator by responding to the announcement.

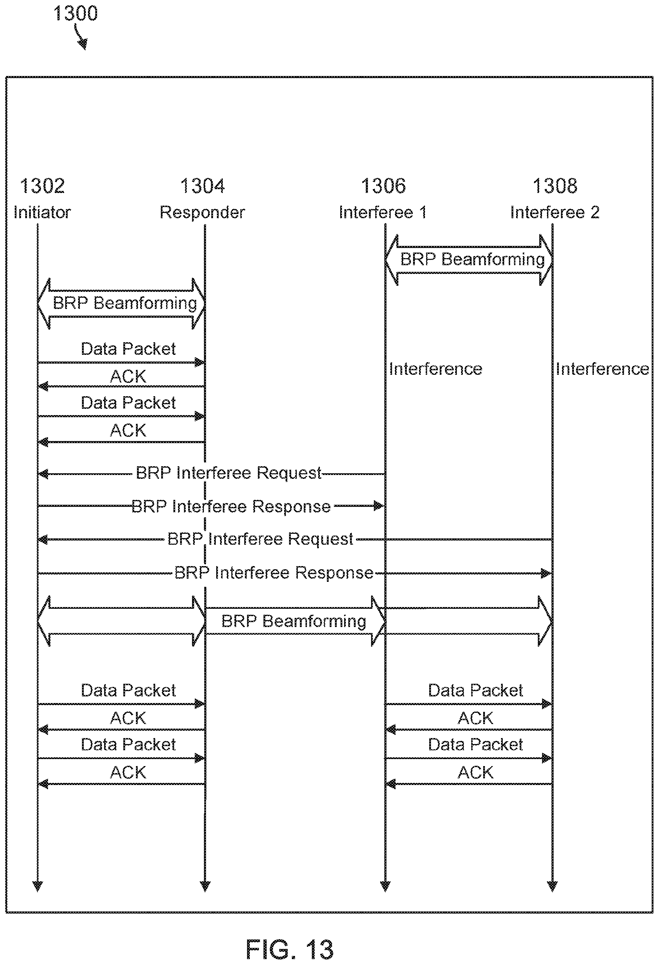

Fig. 13 is a flow chart illustrating an embodiment of a method for mitigating interference in a beamformed wireless communication. The packet by initiator 1302 to the responder 1304 may also cause interference to the interferees 1306 and 1308. In some implementations, to reduce these interferences, an affected interferee may also send a BRP interferee request to the source of the interference (e.g., initiator 1302). Beamforming training data may include null data packets used for training. The beamforming training data may also include the training sequences used for beamforming or refinement of an initial beamforming process (where interference is not considered).

Different algorithms may be implemented to achieve optimization between (1) reducing interference to a concurrent link (between interferees) and (2) increasing beamforming gain to a responder. Concerning reducing interference, in some implementations, interference caused to a concurrent link may be required to be analytically zero; in other implementations, a predefined threshold amount of interference to the concurrent link is allowed. Concerning increasing beamforming gain to a responder, in some implementations, a threshold amount of beamforming gain may be required. In some implementations, an incremental gain from beamforming may be analyzed in view of a corresponding increase in interference to balance different considerations.

In various embodiments, the technologies disclosed in the present disclosure may be implemented as a communication protocol. For example, different devices may take on different roles (an interferee, a transmitter, and a responder), depending on which communication link is active at a given point. In some implementations, an iterative refinement or multi-iteration refinement may be conducted for a given transmitter, as channel measure information between the transmitter and different interferees is obtained. In some implementations, some concurrent links may be assigned, expressly or implicitly, a priority beamforming gain or a tolerance of the maximum amount of interference to a concurrent link caused by other transmitters. In some cases, such priorities or tolerances may be rotated or allocated. In some implementations, a fall back feature is provided. For example, a communication link may refrain from becoming active while other communication links are active, because the interference caused by the other links are higher than what the communication link can tolerate. An arbitration mechanism may be employed to determine which communication link, of the several communication links, should be deactivated or kept inactive, for example.

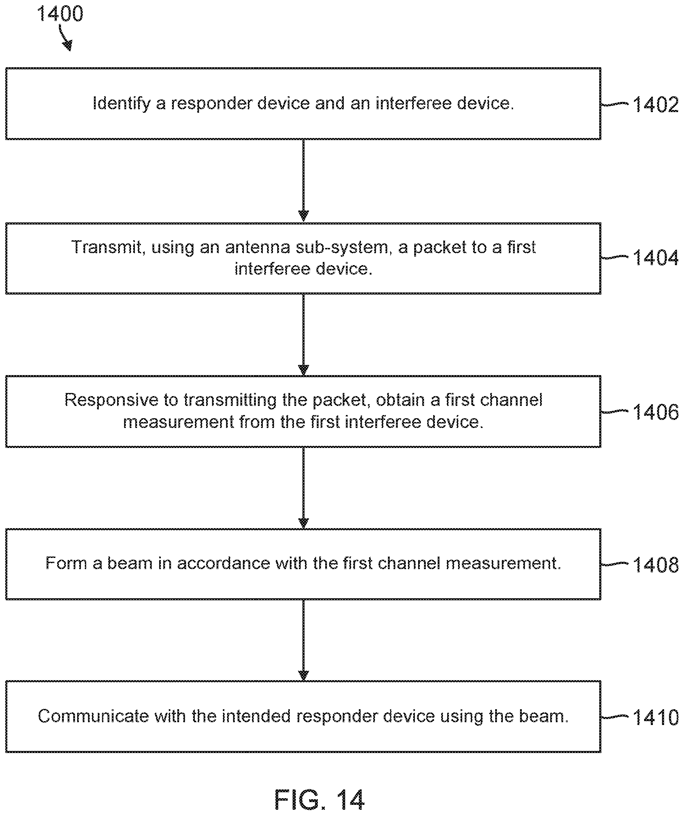

Fig. 14 is a second flow chart illustrating an embodiment of an example method 1400 for mitigating interference on the transmitter side. In some implementations, method 1400 includes: identifying (1402) a responder device and a first interferee device; transmitting (1404), using an antenna sub-system, a packet (e.g., a training packet, a NDP, a data packet, a BRP process initiation packet, or other communication packet, for example) to the first interferee device; responsive to transmitting the packet, obtaining (1406) a first channel measurement from the first interferee device; forming (1408) a beam in accordance with the first channel measurement; and communicating (1410) with the responder device using the beam.

In some implementations, method 1400 further includes: transmitting the packet to a second interferee device; responsive to transmitting the packet, obtaining a second channel measurement from the second interferee device; and forming the beam in accordance with the second channel measurement. In some implementations, method 1400 further includes: transmitting a second packet to a second interferee device; responsive to transmitting the second packet, obtaining a second channel measurement from the second interferee device; and forming the beam in accordance with the second channel measurement. In some implementations, method 1400 further includes: transmitting the packet to the responder device; responsive to transmitting the packet, obtaining a second channel measurement from the responder device; and forming the beam in accordance with the second channel measurement. In some implementations, method 1400 further includes: transmitting the packet to the responder device; responsive to transmitting the packet, obtaining a second channel measurement from the responder device; and forming the beam in accordance with the second channel measurement. In some embodiments, the wireless networking device, the responder device, and the first interferee device communicate with each other using a same communication protocol.

In some implementations, method 1400 further includes: determining an interference minimization priority associated with the first interferee device; and forming the beam in accordance with the interference minimization priority. In some implementations, communicating with the responder device using the beam comprises: communicating with the responder device using a 60 GHz millimeter wave communication (e.g., a communication link established over the 60 GHz frequency band and/or according to compatible standards, such as 802.11ay and/or other wireless communication standards). In some implementations, forming the beam in accordance with the first channel measurement comprises: determining an antenna weight vector based on the first channel measurement to reduce interference caused by the beam to the first interferee device; and forming the beam in accordance with the antenna weight vector.

In some implementations, method 1400 further includes: broadcasting a communication announcement; receiving a response provided by the first interferee device, responsive to the communication announcement; and identifying the first interferee device based on the response. In some implementations, the communication announcement comprises a network address associated with the wireless networking device and a network address associated with the responder device.

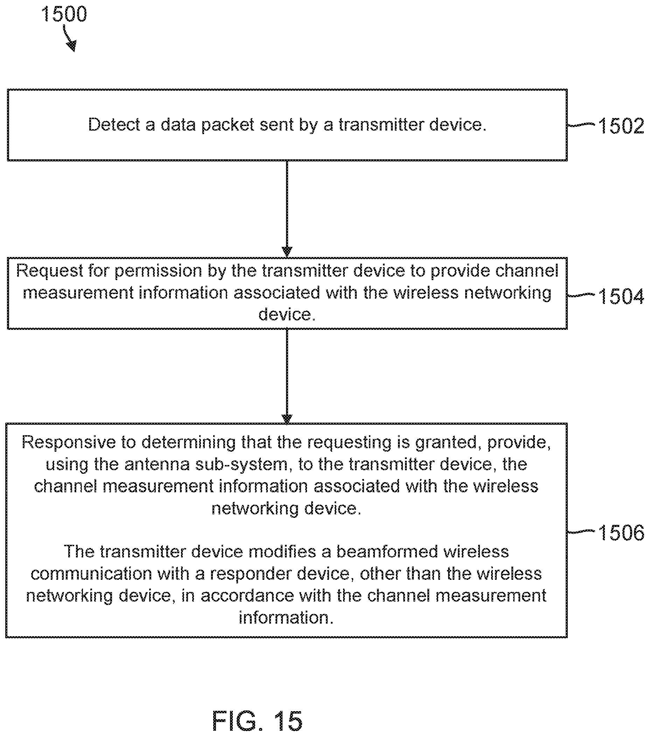

Fig. 15 is a second flow chart illustrating an embodiment of an example method 1500 for mitigating interference on the responder or interferee side. In some implementations, method 1500 includes: detecting (1502) a packet sent by a transmitter device; requesting (1504) permission by the transmitter device to provide channel measurement information associated with the wireless networking device; and responsive to determining that the requesting is granted, providing (1506), using the antenna sub-system, the channel measurement information to the transmitter device, wherein the wireless networking device comprises a non-participating device with respect to communication links formed with respect to the transmitter device (e.g., formed with the transmitter device). The transmitter device may then modify a beamformed wireless communication with a responder device, other than the wireless networking device, in accordance with the channel measurement information.

In some implementations (e.g., in a communication network using 60 GHz communications, for example), after the announcement or first BRP frame from the transmitter, the interferee deciding to participate in the BRP process may be configured to point its Rx antenna towards the transmitter rather than the counterpart of the concurrent communication link.

In some implementations, the detected packet includes information identifying the packet as part of the beamformed wireless communication with the responder device. In some implementations, the detected packet includes information identifying the packet as an announcement broadcasted by the transmitter device to a plurality of communication devices, requesting the plurality of communication devices to provide information regarding the beamformed wireless communication with the responder device. In various embodiments, the wireless networking device, the transmitter device, and the responder device may be configured to communicate with each other using the same communication protocol and/or same frequency band/bands (e.g., those frequency bands associated with a particular wireless standard, such as the 60 GHz band). In some implementations, the data packet comprises a network address associated with the wireless networking device and a network address associated with the responder device. One or more steps described above may be optional, such as when an arbitrary number of interferees are assumed to be present.

Thus, systems and methods for mitigating interference to concurrent links in beamformed communications are disclosed. In some implementations, a networking device (e.g., a transmitter device) comprises a controller and an antenna sub-system configured to generate a beamformed wireless transmission. The controller may be configured to identify a responder device and a first interferee device; transmit, using the antenna sub-system, a data packet to the first interferee device; responsive to transmitting the data packet, obtain a first channel measurement from the first interferee device; form a beam in accordance with both channel measurements; and communicate with the responder device using the beam. In some embodiments, the controller may be further configured to transmit the data packet to a second interferee device; responsive to transmitting the data packet, obtain a second channel measurement from the second interferee device; and form the beam in accordance with all channel measurements. In other embodiments, the controller is configured to transmit a second data packet to a second interferee device; responsive to transmitting the second data packet, obtain a second channel measurement from the second interferee device; and form the beam in accordance with all channel measurements. The controller may then transmit the data packet to the responder device; responsive to transmitting the data packet; obtain a second channel measurement from the responder device; and form the beam in accordance with all channel measurements. In various embodiments, the wireless networking device, the responder devices, and the interferee devices may be configured to communicate with each other using the same communication protocol, as described herein.

In further embodiments, the controller may be configured to determine an interference minimization priority associated with the first interferee device; and form the beam in accordance with the interference minimization priority. The communicating with the responder device using the beam may include communicating with the responder device over a 60 GHz band. Forming the beam in accordance with the first channel measurement may include determining an antenna weight vector based on the first channel measurement to reduce interference caused by the beam to the first interferee device; and forming the beam in accordance with the antenna weight vector. The controller may be configured to broadcast a communication announcement; receive a response provided by the first interferee device, responsive to the communication announcement; and identify the first interferee device based on the response. In some embodiments, the communication announcement comprises a network address associated with the wireless networking device and a network address associated with the responder device.

In another implementation, a wireless networking device (e.g., an interferee device) comprises a controller and an antenna sub-system configured to detect a beamformed wireless transmission. The controller may be configured to detect a data packet sent by a transmitter device; request for permission by the transmitter device to provide channel measurement information associated with the wireless networking device; and responsive to determining that the requesting is granted, provide, using the antenna sub-system, to the transmitter device, the channel measurement information associated with the wireless networking device. The transmitter device modifies a beamformed wireless communication with a responder device, other than the wireless networking device, in accordance with the channel measurement information. In various embodiments, the data packet includes information identifying the data packet as part of the beamformed wireless communication with the responder device, for example, and/or information identifying the data packet as an announcement broadcasted by the transmitter device to a plurality of communication devices, requesting the plurality of communication devices to provide information regarding the beamformed wireless communication with the responder device.

In some, embodiments, the wireless networking device, the transmitter device, and the responder device communicate with each other using the same communication protocol, for example, and the beamformed wireless communication is performed over a 60 GHz band. In some embodiments, the data packet comprises a network address associated with the wireless networking device and a network address associated with the responder device.

In various embodiments, a method for minimizing interference transmitted to interferees can include obtaining communication information (e.g., communication channel information, channel measurement information, a request to participate in a beamforming process, and/or other communication information) from a first interferee device; transmitting a packet to the first interferee device; responsive to transmitting the packet, obtaining a first channel measurement from the first interferee device; forming a beam in accordance with the first channel measurement; and communicating with a first responder device using a communication link formed using the beam, wherein the first interferee device comprises a non-participating device with respect to the communication link. The method may further include: selecting a second interferee device from a plurality of interfere devices; transmitting the packet to a second interferee device; responsive to transmitting the packet, obtaining a second channel measurement from the second interferee device; and forming the beam in accordance with the first channel measurement and the second channel measurement. The method may further include: selecting a second interferee device from a plurality of interfere devices; transmitting a second packet to the second interferee device; responsive to transmitting the second packet, obtaining a second channel measurement from the second interferee device; and forming the beam in accordance with the first channel measurement and the second channel measurement.

In some embodiments, the method may further include: transmitting the packet to the first responder device; responsive to transmitting the packet, obtaining a first responder channel measurement from the first responder device; and forming the beam in accordance with the first responder channel measurement. The method may further include: transmitting the packet to a second responder device; responsive to transmitting the packet, obtaining a second responder channel measurement from the second responder device; and forming the beam in accordance with the first channel measurement, the first responder channel measurement, and the second responder channel measurement. The method may further include: determining an interference minimization priority associated with the first interferee device; and forming the beam in accordance with the interference minimization priority. In some embodiments, communicating with the first responder device using the beam can include communicating with the first responder device using a 60 GHz communication. In some embodiments, forming the beam in accordance with the first channel measurement comprises: determining an antenna weight vector based on the first channel measurement to reduce interference caused by the beam to the first interferee device; and forming the beam in accordance with the antenna weight vector.

In related embodiments, the method may further include: broadcasting a communication announcement; and obtaining communication information responsive to the communication announcement. In some embodiments, the communication announcement comprises a network address associated with the responder device. In some embodiments, forming the beam in accordance with the first channel measurement comprises: refining the beam in accordance with the first channel measurement.

In some embodiments, the method is executed by an initiator device and may also include: receiving a BRP request from the first interferee device after an initial communication between the initiator device and the first responder device.

In some embodiments, the method is executed by an initiator device, and the communication information from the first interferee device comprises a beam form request generated by the first interferee device and responsive to a determination that the first interferee device is interfered to a predefined degree by a communication between the first responder device and the initiator device. In some embodiments, forming the beam in accordance with the first channel measurement comprises modifying the signal strength associated with the beam. In some embodiments, the first interferee device and the first responder device are within a same communication network.

In some embodiments, the method is executed by an initiator device, and the initiator device, the first interferee device and the first responder device communicate with each other using a same communication protocol. In some embodiments, the first channel measurement comprises a direction of an antenna associated with the first interferee device.

In further embodiments, the method may further include: determining a second interferee device different from the first interferee device as declining to participate in forming the beam. The method may further include: detecting a change of circumstance associated with the communicating with the first responder device; and responsive to detecting the change of circumstance, obtaining an updated channel measurement from the first interferee device; forming an updated beam in accordance with the updated channel measurement; and communicating with the first responder device using the updated beam.

Where applicable, various embodiments provided by the present disclosure can be implemented using hardware, software, or combinations of hardware and software. Also where applicable, the various hardware components and/or software components set forth herein can be combined into composite components comprising software, hardware, and/or both. Where applicable, the various hardware components and/or software components set forth herein can be separated into sub-components comprising software, hardware, or both. In addition, where applicable, it is contemplated that software components can be implemented as hardware components, and vice-versa.

Software in accordance with the present disclosure, such as program code and/or data, can be stored on one or more non-transitory machine readable mediums. It is also contemplated that software identified herein can be implemented using one or more general purpose or specific purpose computers and/or computer systems, networked and/or otherwise. Where applicable, the ordering of various steps described herein can be changed, combined into composite steps, and/or separated into sub-steps to provide features described herein.

Embodiments described above illustrate but do not limit the invention. It should also be understood that numerous modifications and variations are possible in accordance with the principles of the present invention. Accordingly, the scope of the invention is defined only by the following claims.

## Claims

1. A wireless networking device, the device being an initiator device and comprising:
an antenna sub-system configured to transmit and receive beamformed wireless transmissions; and
a controller configured to perform operations comprising:
obtaining, using the antenna sub-system, communication information from a first interferee device (108, 210);
transmitting (1404) a packet to the first interferee device (108, 210), wherein the packet is a beam refinement phase, BRP, poll and wherein the packet further comprises a training data packet, TRN-T;
obtaining (1406) a first channel measurement from the first interferee device (108, 210) based on the training data packet;
forming (1408) a beam in accordance with the first channel measurement; and
communicating (1410) with a first responder device (104, 204) using a communication link formed using the beam, wherein the first interferee device (108, 210) is a non-participating device with respect to the communication link.

2. The wireless networking device of claim 1, wherein the controller is further configured to:
transmit the packet to the first responder device (104, 204);
obtain a first responder channel measurement from the first responder device (104, 204); and
form the beam in accordance with the first responder channel measurement.

3. The wireless networking device of claim 1, wherein the controller is further configured to:
broadcast a communication announcement; and
obtain the communication information responsive to the communication announcement.

4. A method performed by an initiator device, the method comprising:
obtaining communication information from a first interferee device (108, 210);
transmitting (1404) a packet to the first interferee device (108, 210), wherein the packet is a beam refinement phase, BRP, poll and wherein the packet further comprises a training data packet, TRN-T;
obtaining (1406) a first channel measurement from the first interferee device (108, 210) based on the training data packet;
forming (1408) a beam in accordance with the first channel measurement; and
communicating (1410) with a first responder device (104, 204) using a communication link formed using the beam, wherein the first interferee device (108, 210) is a non-participating device with respect to the communication link.

5. The method of claim 4, further comprising:
transmitting a second packet to a second interferee device;
obtaining a second channel measurement from the second interferee device; and
forming the beam in accordance with the first channel measurement and the second channel measurement.

6. The method of claim 4, further comprising:
transmitting the packet to the first responder device (104, 204) and second responder device (206);
obtaining a first responder channel measurement from the first responder device (104, 204);
obtaining a second responder channel measurement from the second responder device (206); and
forming the beam in accordance with the first channel measurement, the first responder channel measurement, and the second responder channel measurement.

7. The method of claim 4, wherein forming the beam in accordance with the first channel measurement comprises:
determining an antenna weight vector based on the first channel measurement to reduce interference caused by the beam to the first interferee device (108, 210); and
forming the beam in accordance with the antenna weight vector.

8. The method of claim 4, further comprising:
receiving a BRP request from the first interferee device (108, 210) after an initial communication between the wireless networking device and the first responder device (104, 204).

9. The method of claim 4, wherein the communication information from the first interferee device (108, 210) comprises a beam form request generated by the first interferee device (108, 210) and responsive to a determination that the first interferee device (108, 210) is interfered to a predefined degree by a communication between the first responder device (104, 204) and the initiator device.

10. A wireless networking device, the device being an interferee device and comprising:
an antenna sub-system configured to transmit and receive beamformed wireless transmissions; and
a controller configured to perform operations comprising:
detecting (1502), using the antenna sub-system, a packet sent by an initiator device, wherein the packet is a beam refinement phase, BRP, poll and wherein the packet further comprises a training data packet, TRN-T;
requesting (1504) permission from the initiator device to provide channel measurement information associated with the wireless networking device;
determining channel measurement information based on the training data packet; and
providing (1506) the channel measurement information to the initiator device, wherein the wireless networking device is a non-participating device with respect to communication links formed with respect to the initiator device.

11. The wireless networking device of claim 10, wherein the packet includes information identifying the packet as part of a beamformed wireless communication with a responder device.

12. The wireless networking device of claim 10, wherein the packet comprises information identifying the packet as an announcement broadcasted by the initiator device to a plurality of wireless networking devices and requesting the plurality of wireless networking devices provide communication information regarding a beamformed wireless communication with a responder device.

13. A method performed by an interferee device, the method comprising:
detecting (1502), using the antenna sub-system, a packet sent by an initiator device, wherein the packet is a beam refinement phase, BRP, poll and wherein the packet further comprises a training data packet, TRN-T;
requesting (1504) permission from the initiator device to provide channel measurement information associated with the interferee device;
determining channel measurement information based on the training data packet; and
providing (1506) the channel measurement information to the initiator device, wherein the interferee device is a non-participating device with respect to communication links formed with respect to the initiator device.

14. A computer program product comprising instructions which, when the program is executed by a computer of an initiator device, cause the computer to carry out the steps of a method according to any of claims 4 to 9.

15. A computer program product comprising instructions which, when the program is executed by a computer of an interferee device, cause the computer to carry out the steps of a method according to claim 13.

## Patentansprüche

1. Ein drahtloses Netzwerkgerät, welches das Gerät ein Initiatorgerät ist und aufweist:
ein Antennen-Subsystem, das angepasst ist, strahlgeformte drahtlose Übertragungen zu Senden und zu Empfangen; und
eine Steuereinheit, die angepasst ist, Operationen durchzuführen, die aufweisen:
Erhalten, unter Verwendung des Antennen-Subsystems, von Kommunikationsinformation von einem ersten interferierenden Gerät (108, 210);
Übertragen (1404) eines Pakets an das erste interferierende Gerät (108, 210), wobei das Paket eine Strahlverbesserungsphasen, BRP, Rundfrage ist und wobei das Paket weiter aufweist ein Trainingsdatenpaket, TRN-T;
Erhalten (1406) einer ersten Kanalmessung von dem ersten interferierenden Gerät (108, 210) basierend auf dem Trainingsdatenpaket;
Bilden (1408) eines Strahls in Übereinstimmung mit der ersten Kanalmessung; und
Kommunizieren (1410) mit einem ersten Antwortgerät (104, 204) unter Verwendung einer Kommunikationsverbindung, die gebildet wird unter Verwendung des Strahls, wobei das erste interferierende Gerät (108, 210) ein nicht-teilnehmendes Gerät ist in Bezug auf die Kommunikationsverbindung.

2. Das drahtlose Netzwerkgerät von Anspruch 1, wobei die Steuereinheit weiter angepasst ist zu:
Übertragen des Pakets an das erste Antwortgerät (104, 204);
Erhalten einer ersten Antwortkanalmessung von dem ersten Antwortgerät (104, 204); und
Bilden des Strahls in Übereinstimmung mit der ersten Antwortkanalmessung.

3. Das drahtlose Netzwerkgerät von Anspruch 1, wobei die Steuereinheit weiter angepasst ist,
eine Kommunikationsankündigung auszustrahlen; und
die Kommunikationsinformation in Antwort auf die Kommunikationsankündigung zu erhalten.

4. Ein Verfahren durchgeführt durch ein Initiatorgerät, das Verfahren aufweisend:
Erhalten von Kommunikationsinformation von einem ersten interferierenden Gerät (108, 210);
Übertragen (1404) eines Pakets an das erste interferierende Gerät (108, 210), wobei das Paket eine Strahlverbesserungsphasen, BRP, Rundfrage ist und wobei das Paket weiter aufweist ein Trainingsdatenpaket, TRN-T;
Erhalten (1406) einer ersten Kanalmessung von dem ersten interferierenden Gerät (108, 210) basierend auf dem Trainingsdatenpaket;
Bilden (1408) eines Strahls in Übereinstimmung mit der ersten Kanalmessung; und
Kommunizieren (1410) mit einem ersten Antwortgerät (104, 204) unter Verwendung einer Kommunikationsverbindung, die gebildet wird unter Verwendung des Strahls, wobei das erste interferierende Gerät (108, 210) ein nicht-teilnehmendes Gerät ist in Bezug auf die Kommunikationsverbindung.

5. Das Verfahren von Anspruch 4, weiter aufweisend:
Übertragen eines zweiten Pakets an ein zweites interferierendes Gerät;
Erhalten einer zweiten Kanalmessung von dem zweiten interferierenden Gerät; und
Bilden des Strahls in Übereinstimmung mit der ersten Kanalmessung und der zweiten Kanalmessung.

6. Das Verfahren von Anspruch 4, weiter aufweisend:
Übertragen des Pakets an das erste Antwortgerät (104, 204) und zweite Antwortgerät (206);
Erhalten einer ersten Antwortkanalmessung von dem ersten Antwortgerät (104, 204);
Erhalten einer zweiten Antwortkanalmessung von dem zweiten Antwortgerät (206); und
Bilden des Stahls in Übereinstimmung mit der ersten Kanalmessung, der ersten Antwortkanalmessung und der zweiten Antwortkanalmessung.

7. Das Verfahren von Anspruch 4, wobei Bilden des Strahls in Übereinstimmung mit der ersten Kanalmessung aufweist:
Bestimmen eines Antennenwichtungsvektors basierend auf der ersten Kanalmessung zum Reduzieren von Interferenz, die verursacht wird durch den Strahl zu dem ersten interferierenden Gerät (108, 210); und
Bilden des Strahls in Übereinstimmung mit dem Antennenwichtungsvektor.

8. Das Verfahren von Anspruch 4, weiter aufweisend:
Empfangen einer BRP Anfrage von dem ersten interferierenden Gerät (109, 210) nach einer anfänglichen Kommunikation zwischen dem drahtlosen Netzwerkgerät und dem ersten Antwortgerät (104, 204).

9. Das Verfahren von Anspruch 4, wobei die Kommunikationsinformation von dem ersten interferierenden Gerät (108, 210) aufweist eine Strahlformungsanfrage, die erzeugt wird durch das erste interferierende Gerät (108, 210) und in Antwort auf eine Bestimmung, dass das erste interferierende Gerät (108, 210) bis zu einem vorbestimmten Grad interferiert durch eine Kommunikation zwischen dem ersten Antwortgerät (104, 204) und dem Initiatorgerät.

10. Ein drahtloses Netzwerkgerät, wobei das Gerät ein interferierendes Gerät ist und aufweist:
ein Antennen-Subsystem, das angepasst ist, strahlgeformte drahtlose Übertragungen zu Übertragen und zu Empfangen; und
eine Steuerungseinheit, die angepasst ist, Operationen aufzuführen, die aufweisen:
Detektieren (1502), unter Verwendung des Antennen-Subsystems, eines Pakets, das von einem Initiatorgerät gesendet wurde, wobei das Paket eine Strahlverbesserungsphasen, BRP, Rundfrage ist und wobei das Paket weiter aufweist ein Trainingsdatenpaket, TRN-T;
Anfragen (1504) nach Erlaubnis von dem Initiatorgerät, um Kanalmessungsinformation verbunden mit dem drahtlosen Netzwerkgerät bereitzustellen;
Bestimmen von Kanalmessungsinformation basierend auf dem Trainingsdatenpaket; und
Bereitstellen (1506) der Kanalmessungsinformation an das Initiatorgerät, wobei das drahtlose Netzwerkgerät ein nicht-teilnehmendes Gerät ist in Bezug auf die Kommunikationsverbindungen, die gebildet werden in Bezug auf das Initiatorgerät.

11. Das drahtlose Netzwerkgerät von Anspruch 10, wobei das Paket umfasst, Information, die das Paket als Teil einer strahlgeformten drahtlosen Kommunikation mit einem Antwortgerät identifiziert.

12. Das drahtlose Netzwerkgerät von Anspruch 10, wobei das Paket aufweist Information, die das Paket identifiziert als eine Ankündigung, die ausgestrahlt wird durch das Initiatorgerät an eine Vielzahl von drahtlosen Netzwerkgeräten, und die die Vielzahl von drahtlosen Netzwerkgeräten anfragt, Kommunikationsinformation bezüglich einer strahlgeformten drahtlosen Kommunikation mit einem Antwortgerät bereitzustellen.

13. Ein Verfahren durchgeführt durch ein interferierendes Gerät, das Verfahren aufweisend:
Detektieren (1502), unter Verwendung des Antennen-Subsystems, eines Pakets, das von einem Initiatorgerät gesendet wurde, wobei das Paket eine Strahlverbesserungsphasen, BRP, Rundfrage ist und wobei das Paket weiter aufweist ein Trainingsdatenpaket, TRN-T;
Anfragen (1504) nach Erlaubnis von dem Initiatorgerät, um Kanalmessungsinformation verbunden mit dem interferierenden Gerät bereitzustellen;
Bestimmen von Kanalmessungsinformation basierend auf dem Trainingsdatenpaket; und
Bereitstellen (1506) der Kanalmessungsinformation an das Initiatorgerät, wobei das interferierende Gerät ein nicht-teilnehmendes Gerät ist in Bezug auf die Kommunikationsverbindungen, die gebildet werden in Bezug auf das Initiatorgerät.

14. Ein Computerprogrammprodukt aufweisend Instruktionen, die wenn das Programm von einem Computer eines Initiatorgeräts ausgeführt wird, verursachen, dass der Computer die Schritte eines Verfahrens gemäß einem der Ansprüche 4 bis 9 ausführt.

15. Ein Computerprogrammprodukt aufweisend Instruktionen, die wenn das Programm von einem Computer eines interferierenden Geräts ausgeführt wird, verursachen, dass der Computer die Schritte eines Verfahrens gemäß Anspruch 13 ausführt.

## Revendications

1. Un dispositif de mise en réseau sans fil, le dispositif étant un dispositif initiateur et comprenant :
un sous-système d'antenne configuré pour émettre et recevoir des transmissions sans fil à formation de faisceau ; et
un contrôleur configuré pour réaliser des opérations comprenant :
l'obtention, en utilisant le sous-système d'antenne, d'une information de communication en provenance d'un premier dispositif soumis à interférence (108, 210) ;
la transmission (1404) d'un paquet au premier dispositif soumis à interférence (108, 210), dans lequel le paquet est une interrogation de phase d'amélioration de faisceau, BRP, et dans lequel le paquet comprend en outre un paquet de données d'apprentissage, TRN-T ;
l'obtention (1406) d'une première mesure de canal en provenance du premier dispositif soumis à interférence (108, 210), sur la base du paquet de données d'apprentissage ;
la formation (1408) d'un faisceau conformément à la première mesure de canal ; et
la communication (1410) avec un premier dispositif répondeur (104, 204) en utilisant une liaison de communication formée en utilisant le faisceau, dans lequel le premier dispositif soumis à interférence (108, 210) est un dispositif non participant par rapport à la liaison de communication.

2. Le dispositif de mise en réseau sans fil selon la revendication 1, dans lequel le contrôleur est configuré en outre pour :
transmettre le paquet au premier dispositif répondeur (104, 204) ;
obtenir une première mesure de canal répondeur en provenance du premier dispositif répondeur (104, 204) ; et
former le faisceau conformément à la première mesure de canal répondeur.

3. Le dispositif de mise en réseau sans fil selon la revendication 1, dans lequel le contrôleur est configuré en outre pour :
diffuser une annonce de communication ; et
obtenir l'information de communication en réponse à l'annonce de communication.

4. Un procédé réalisé par un dispositif initiateur, le procédé comprenant :
l'obtention d'une information de communication en provenance d'un premier dispositif soumis à interférence (108, 210) ;
la transmission (1404) d'un paquet au premier dispositif soumis à interférence (108, 210), dans lequel le paquet est une interrogation de phase d'amélioration de faisceau, BRP, et dans lequel le paquet comprend en outre un paquet de données d'apprentissage, TRN-T ;
l'obtention (1406) d'une première mesure de canal en provenance du premier dispositif soumis à interférence (108, 210), sur la base du paquet de données d'apprentissage ;
la formation (1408) d'un faisceau conformément à la première mesure de canal ; et
la communication (1410) avec un premier dispositif répondeur (104, 204) en utilisant une liaison de communication formée en utilisant le faisceau, dans lequel le premier dispositif soumis à interférence (108, 210) est un dispositif non participant par rapport à la liaison de communication.

5. Le procédé selon la revendication 4, comprenant en outre :
la transmission d'un deuxième paquet à un deuxième dispositif soumis à interférence ;
l'obtention d'une deuxième mesure de canal en provenance du deuxième dispositif soumis à interférence ; et
la formation du faisceau conformément à la première mesure de canal et à la deuxième mesure de canal.

6. Le procédé selon la revendication 4, comprenant en outre :
la transmission du paquet au premier dispositif répondeur (104, 204) et à un deuxième dispositif répondeur (206) ;
l'obtention d'une première mesure de canal répondeur en provenance du premier dispositif répondeur (104, 204) ;
l'obtention d'une deuxième mesure de canal répondeur en provenance du deuxième dispositif répondeur (206) ; et
la formation du faisceau conformément à la première mesure de canal, la première mesure de canal répondeur et la deuxième mesure de canal répondeur.

7. Le procédé selon la revendication 4, dans lequel la formation du faisceau conformément à la première mesure de canal comprend :
la détermination d'un vecteur de pondération d'antenne sur la base de la première mesure de canal pour réduire une interférence causée par le faisceau au premier dispositif soumis à interférence (108, 210) ; et
la formation du faisceau conformément au vecteur de pondération d'antenne.

8. Le procédé selon la revendication 4, comprenant en outre :
la réception d'une requête BRP en provenance du premier dispositif soumis à interférence (108, 210) après une communication initiale entre le dispositif de mise en réseau sans fil et le premier dispositif répondeur (104, 204).

9. Le procédé selon la revendication 4, dans lequel l'information de communication provenant du premier dispositif soumis à interférence (108, 210) comprend une requête de forme de faisceau générée par le premier dispositif soumis à interférence (108, 210) et en réponse à une détermination que le premier dispositif soumis à interférence (108, 210) est soumis à l'interférence à un degré prédéfini par une communication entre le premier dispositif répondeur (104, 204) et le dispositif initiateur.

10. Un dispositif de mise en réseau sans fil, le dispositif étant un dispositif soumis à interférence et comprenant :
un sous-système d'antenne configuré pour émettre et recevoir des transmissions sans fil à formation de faisceau ; et
un contrôleur configuré pour réaliser des opérations comprenant :
la détection (1502), en utilisant le sous-système d'antenne, d'un paquet envoyé par un dispositif initiateur, dans lequel le paquet est une interrogation de phase d'amélioration de faisceau, BRP, et dans lequel le paquet comprend en outre un paquet de données d'apprentissage, TRN-T ;
la requête (1504) d'une autorisation au dispositif initiateur pour délivrer une information de mesure de canal associée au dispositif de mise en réseau sans fil ;
la détermination d'une information de mesure de canal sur la base du paquet de données d'apprentissage ; et
la délivrance (1506) de l'information de mesure de canal au dispositif initiateur, dans lequel le dispositif de mise en réseau sans fil est un dispositif non participant par rapport à des liaisons de communication formées par rapport au dispositif initiateur.

11. Le dispositif de mise en réseau sans fil selon la revendication 10, dans lequel le paquet contient une information identifiant le paquet en tant que partie d'une communication sans fil à formation de faisceau avec un dispositif répondeur.

12. Le dispositif de mise en réseau sans fil selon la revendication 10, dans lequel le paquet comprend une information identifiant le paquet en tant qu'annonce diffusée par le dispositif initiateur à une pluralité de dispositifs de mise en réseau sans fil et requérant à la pluralité de dispositifs de mise en réseau sans fil de délivrer une information de communication concernant une communication sans fil à formation de faisceau avec un dispositif répondeur.

13. Un procédé réalisé par un dispositif soumis à interférence, le procédé comprenant :
la détection (1502), en utilisant le sous-système d'antenne, d'un paquet envoyé par un dispositif initiateur, dans lequel le paquet est une interrogation de phase d'amélioration de faisceau, BRP, et dans lequel le paquet comprend en outre un paquet de données d'apprentissage, TRN-T ;
la requête (1504) d'une autorisation au dispositif initiateur pour délivrer une information de mesure de canal associée au dispositif soumis à interférence ;
la détermination d'une information de mesure de canal sur la base du paquet de données d'apprentissage ; et
la délivrance (1506) de l'information de mesure de canal au dispositif initiateur, dans lequel le dispositif soumis à interférence est un dispositif non participant par rapport à des liaisons de communication formées par rapport au dispositif initiateur.

14. Un produit de programme de calculateur comprenant des instructions qui, quand le programme est exécuté par un calculateur d'un dispositif initiateur, amènent le calculateur à réaliser les étapes d'un procédé selon une des revendications 4 à 9.

15. Un produit de programme de calculateur comprenant des instructions qui, quand le programme est exécuté par un calculateur d'un dispositif soumis à interférence, amènent le calculateur à réaliser les étapes d'un procédé selon la revendication 13.
